# EUROPEAN PATENT SPECIFICATION

(11) **EP 1 315 394 B1**
(45) Date of publication and mention of the grant of the patent: **12.01.2005**
(21) Application number: 02396173.3
(22) Date of filing: 20.11.2002
(51) Int. Cl.: H04Q 7/38, H04L 12/56, H04L 12/28

(54) **Short-distance wireless connections in a telecommunication network**
Drahtlose Verbindungen kurzer Reichweite in einem Telekommunikationsnetz
Connexions sans fil à courte distance dans un réseau de télécommunication

(30) Priority: 22.11.2001 FI 20012283
(43) Date of publication of application: 28.05.2003
(73) Proprietor: TeliaSonera Finland Oyj, 00510 Helsinki (FI)
(72) Inventor: Korhonen, Jouni, 11100 Riihimäki (FI); Keisala, Ilkka, 01600 Vantaa (FI); Väänänen, Kai, 02940 Espoo (FI)
(74) Representative: Simmelvuo, Markku

(56) References cited:
- EP-A- 1 130 933
- EP-A- 1 146 692
- WO-A-00/56105
- WO-A-00/69186
- WO-A-01/58113
- WO-A-01/65821
- "SPECIFICATION OF THE BLUETOOTH SYSTEM" ., 1 December 1999 (1999-12-01), XP002175286
- THE BLUETOOTH FORUM: "Generic Access Profile" ., 22 February 2001 (2001-02-22), XP002175814

## Description

### FIELD OF THE INVENTION

The present invention relates to telecommunication. In particular, the invention relates to a new and sophisticated method for authenticating short-distance wireless connection setup, encrypting a connection set up and transmitting presence and location data over short-distance wireless connections.

### PRIOR ART

The popularity of wireless terminals, such as e.g. mobile stations has increased at a fast tempo during the past ten years. In addition, short-distance wireless connections are being introduced. 'Short-distance wireless connection' refers to a connection based on short-range radio link technology with a maximum range of the order of ten meters, primarily intended for use inside buildings and preferably so that the transmitter and receiver are situated in the same room, said connection permitting communication of information among more than two devices at a time. In particular, short-distance wireless connections are designed to replace cable connections, which are in use at present. Further, short-distance wireless connections are designed to replace infrared links, which involve the disadvantage of a short operating range, typically only a couple of meters. Moreover, infrared links require accurate alignment, and the transmission path between transmitter and receiver must be free of obstacles. In addition, an infrared connection only permits communication of information between two devices at a time.

One of these short-distance wireless connection technologies is the Bluetooth technology. Bluetooth uses a 2..4 GHz ISM (Industrial Scientific Medicine) band for data transfer. In most countries, this frequency band lies between 2400-2483,5 MHz. The frequency band is divided into 1 MHz channels. The protocol used by Bluetooth is a combination of circuit switching and packet switching. Data transfer is implemented using a spread spectrum based on frequency hopping. The maximum operating range is normally of the order of ten meters. By increasing the transmission power, it is possible to increase the range up to one hundred meters. Connections may be bilateral or multilateral. Bluetooth is preferably implemented as a microcircuit, which is either integrated directly in the device utilizing it or installed afterwards as an expansion card.

Prior art includes EP-A-1 146 692 which discloses an apparatus and an associated method for facilitating authentication of communication stations in a mobile communication system. A manner is provided by which to provide to the network portion of the communication system unique identifiers which identify the Bluetooth transceiver circuitry of the mobile terminal.

However, current implementations of short-distance wireless connections involve many drawbacks that reduce their service value. For example, setting up temporary, so-called ad-hoc networks between Bluetooth terminals is at present no user-friendly or visually observable process because present terminals provided with Bluetooth are very uninformative when connections and temporary networks are being set up. For instance, the other party is only shown as a row of figures resembling a MAC code (Media Access Control). Further, today's Bluetooth technology provides no solution to the problem of distribution of encryption keys. Moreover, the transmission of presence and/or location information is a problem with current short-distance wireless connections. In current solutions, for example, users have to update their status themselves every time when it changes. Furthermore, current implementations provide no possibility to associate location data with presence data.

### OBJECT OF THE INVENTION

The object of the present invention is to disclose a new type of method that eliminates the above-mentioned drawbacks or at least significantly alleviates them. A specific object of the invention is to disclose a method that enables authentication of short-distance wireless connection setup and encryption of a connection set up as well as transmission of presence and location data over short-distance wireless connections.

### BRIEF DESCRIPTION OF THE INVENTION

In the present invention for authentication of short-distance wireless connection setup and encryption of a connection set up between two or more mobile terminals in a digital mobile communication network comprising a number of mobile terminals and a gateway server, each of said mobile terminals comprising a subscriber identity module and a short-distance wireless connection module, a short-distance wireless connection setup inquiry is sent from a first terminal to a second terminal. Next, the first terminal is identified by the second terminal. On the basis of a predetermined selection parameter, one of the terminals is selected as master and the other as slave. The digital mobile communication network is e.g. a GSM network (Global System for Mobile Communication) or a UMTS network (Universal Mobile Telecommunications System). It is to be noted that the aforesaid digital mobile communication network and temporary short-distance wireless network consisting of terminals utilizing short-distance wireless connections are entities independent of each other.

According to the invention, the MSISDN subscriber number (Mobile Subscriber ISDN) of the first terminal is sent together with the short-distance wireless connection setup inquiry to the second terminal. Further according to the invention, the said MSISDN subscriber number of the first terminal is utilized for identification of the first terminal by the second terminal. Further according to the invention, a short message inquiry is sent from the terminal selected as master to the gateway server. Further according to the invention, a random number is generated by the gateway server in response to the short message inquiry. Further according to the invention, the random number generated is sent in a response to the short message inquiry from the gateway server to both terminals. Further according to the invention, encryption of the short-distance wireless connection set up between the terminals is performed using the aforesaid random number and encryption keys stored on the user identity modules of the terminals.

In an embodiment of the invention, the random number is produced by generating it using the gateway server.

In an embodiment of the invention, the random number is produced by sending a random number request from the gateway server to a Home Location Register provided in connection with the aforesaid mobile communication network and sending the random number in question from the Home Location Register to the gateway server in response to the request.

In an embodiment of the invention, the target address of the short message inquiry comprises the subscriber number of the gateway server.

In an embodiment of the invention, the information contained in the short message inquiry comprises the MSISDN subscriber number of the terminal selected as slave.

In an embodiment of the invention, the MSISDN subscriber numbers of the terminals are used as a selection parameter.

In an embodiment of the invention, for identification of the first terminal by the second terminal, the MSISDN subscriber number of the first terminal is presented on the display of the second terminal.

In an embodiment of the invention, the short-distance wireless connection set up between the terminals is encrypted by using a predetermined symmetrical-key encryption technique.

In an embodiment of the invention, the short-distance wireless connection is a Bluetooth connection.

In an embodiment of the invention, the short-distance wireless connection is an IrDA connection (Infrared Data Association).

In an embodiment of the invention, the subscriber identity module is a USIM module (Universal Subscriber Identity Module).

In an embodiment of the invention, the USIM module comprises a dedicated storage location, which comprises predetermined connection parameters associated with short-distance wireless connection setup.

In an embodiment of the invention, the connection parameters comprise the MSISDN subscriber numbers of those terminals with which short-distance wireless connection setup is allowed.

In an embodiment of the invention, the connection parameters comprise the MSISDN subscriber numbers of those terminals with which short-distance wireless connection setup is not allowed.

In an embodiment of the invention, the connection parameters comprise the MSISDN subscriber numbers of those terminals with which short-distance wireless connection setup is only allowed after a separate interactive verification inquiry.

In the present invention for the transmission of presence and location information between two or more terminals in a telecommunication network, said telecommunication network comprising a number of terminals and a number of base stations, said terminals and base stations communicating with each other using short-distance wireless connections, a first terminal is disposed within the coverage area of a first base station and a short-distance wireless connection is set up between the first terminal and the first base station.

According to the invention, a location server is provided in connection with the telecommunication network. Further according to the invention, terminal-specific presence data, comprising an identifier of the first base station and an indication of whether the first terminal in question is present within the area of the telecommunication network, is transmitted automatically from the first base station to the location server. Further according to the invention, terminal-specific location data, comprising an identifier of the first base station and information indicating the base station in whose coverage area the first terminal in question is located, is transmitted automatically from the first base station to the location server. Further according to the invention, the presence data and location data for the first terminal are automatically transmitted from the location server to one or more other terminals. Further according to the invention, when the first terminal is moving so that its location data changes, said location data is updated automatically in the location server and the updated location data is transmitted to one or more other terminals. Further according to the invention, when the first terminal is moving so that its presence data changes, said presence data is updated automatically in the location server and the updated location data is transmitted to one or more other terminals.

In an embodiment of the invention, the SIP protocol (Session Initiation Protocol) is utilized in transmitting the location data. The SIP protocol is a protocol standardized by the IETF (Internet Engineering Task Force), intended for the initiation of an interactive user session.

In an embodiment of the invention, the SIP protocol is utilized in transmitting the presence data.

In an embodiment of the invention, the information regarding the base station in whose coverage area a given terminal is located, which is included in the location data, comprises an additional parameter definable by the user of the terminal in question.

In an embodiment of the invention, when the terminal is simultaneously located in the coverage areas of two or more different base stations, the terminal in question is sent a notification about the situation as well as a list of the base stations concerned, on the basis of which the base station to be transmitted in the location data is selected interactively by the user of the terminal.

In an embodiment of the invention, the short-distance wireless connections are Bluetooth connections.

In an embodiment of the invention, the telecommunication network is a WLAN network (Wireless Local Network).

As compared with prior-art technology, the present invention provides the advantage that it facilitates the setup of temporary short-distance wireless networks between terminals by making network setup more user-friendly and visually clear. The invention enables terminals trying to enter into the network to be identified by their MSISDN subscriber numbers. Further, the invention makes it possible to display to the user the plain-language names corresponding to these MSISDN subscriber numbers if said MSISDN subscriber numbers are stored in the memory of the subscriber identity module of the user's terminal.

Further, the invention solves the problem of distribution of encryption keys by utilizing between terminals an encryption system of the type used in present digital mobile communication networks together with the encryption key already existing on the subscriber identity module.

Further, the invention provides a more user-friendly presence service, in which the presence data and location data are updated automatically without requiring the user to personally update the data every time the status is changed. Moreover, the invention allows the use of several additional parameters in the presence service.

### LIST OF ILLUSTRATIONS

In the following, the invention will be described in detail by the aid of embodiment examples with reference to the attached drawings, wherein
Fig. 1 is a diagrammatic illustration of a method according to the invention, and
Fig. 2 is a diagrammatic illustration of a method according to the invention.

### DETAILED DESCRIPTION OF THE INVENTION

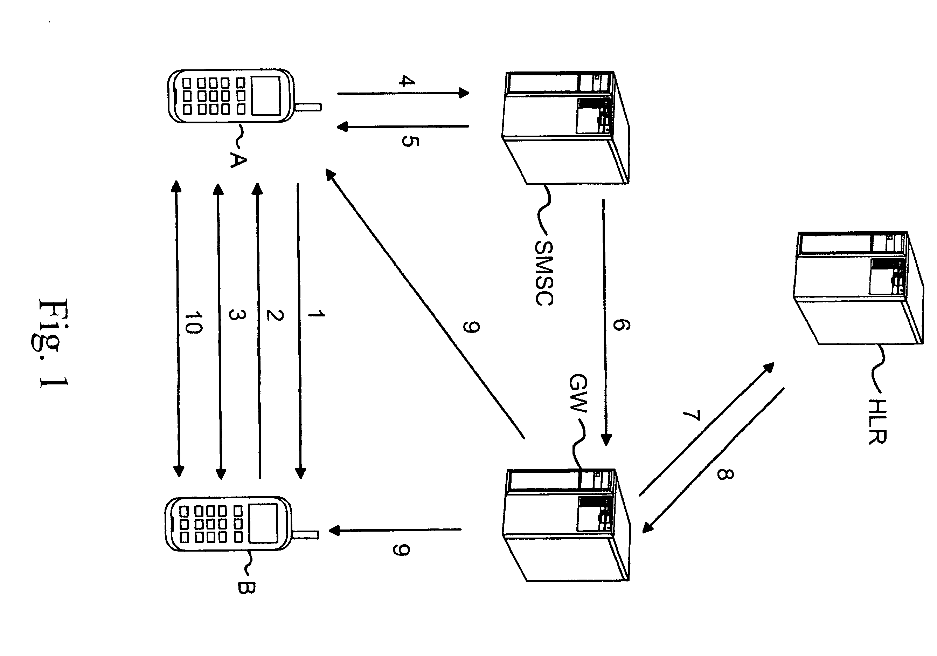

Fig. 1 presents by way of example a diagrammatic illustration of a method according to the invention for authentication of short-distance wireless connection setup and for encryption of a connection set up between two or more mobile communication terminals in a digital mobile communication network, which comprises mobile communication terminals A and B provided with a Bluetooth function, and a gateway server GW, a home location register HLR and a short message switching center SMSC.

At step 1, A starts the process of setting up a Bluetooth connection. B receives a connection setup inquiry and performs a master-slave comparison. After the comparison, B sends a notification of the result to A, step 2. At step 3, a connection exists between A and B, but so far unauthenticated and unreliable. In the master-slave comparison carried out, A is selected as master on the basis of the MSISDN subscriber numbers of A and B, so A sends a SMS short message into the mobile communication network. The target address of the message is the gateway server's GW target number used as service number. The message content consists of the MSISDN subscriber number of B. At step 4, the message is transmitted to the short message switching center, and at step 5 an eventual acknowledgement of receipt of the message is transmitted to A.

At step 6, the short message switching center SMSC directs the message to the gateway server GW on the basis of the target address included in the message. The gateway server GW requests a random number for A from the home location register HLR, step 7. At step 8, the home location register HLR returns a random number to the gateway server GW. Instead of the home location register HLR, a random number can also be generated e.g. directly by the gateway server GW. As a result of the request, the gateway server GW returns the same random number in a short message to both A and B, step 9. At step 10, the random number received is taken into use and the connection between A and B is encrypted using a symmetrical-key technique known in itself.

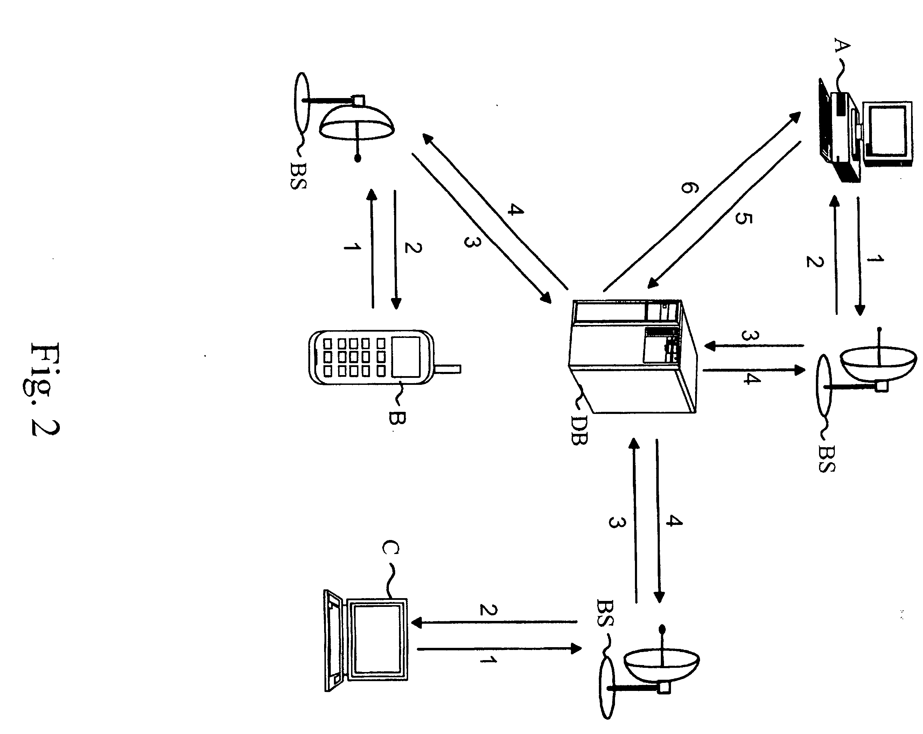

Fig. 2 presents a diagram illustrating by way of example a method according to the invention for transmitting presence and location data between two or more terminals in a telecommunication network, said telecommunication network comprising a number of terminals A, B and C, a number of base stations BS and a location server DB. The terminals A, B, C and the base stations BS communicate with each other using Bluetooth connections. Fig. 2 shows terminals of three different types. At steps 1 and 2, a terminal and a Bluetooth base station are signaling, in other words, they find each other and set up a Bluetooth connection. At steps 3 and 4, the Bluetooth base station transmits data to the location server to indicate that a given client has entered the coverage area of this base station. In steps 5 and 6, which represent an alternative to steps 3 and 4, the clients are connected to the location server via a permanent connection. After this, all active users of the location service are automatically updated with information giving the actual locations of the terminals. If necessary, authentication can be carried out using the method illustrated in Fig. 1.

The invention is not limited to the embodiment examples described above; instead, many variations are possible within the scope of the inventive concept defined in the claims.

## Claims

1. Method for authentication of short-distance wireless connection setup and encryption of a connection set up between two or more mobile communication terminals in a digital mobile communication network comprising a number of mobile terminals (A, B) and a gateway server (GW), each of said mobile terminals comprising a subscriber identity module and a short-distance wireless connection module, said method comprising the steps of:
sending a short-distance wireless connection setup inquiry from a first terminal (A) to a second terminal (B),
identification of the first terminal (A) by the second terminal (B), and
selecting one of the terminals as master and the other as slave on the basis of a predetermined selection parameter,
**characterized in that** the method further comprises the steps of:
sending the MSISDN subscriber number (Mobile Subscriber ISDN) of the first terminal (A) together with the short-distance wireless connection setup inquiry to the second terminal (B),
utilizing the said MSISDN subscriber number of the first terminal (A) for identification of the first terminal (A) by the second terminal (B),
sending a short message inquiry from the terminal selected as master to the gateway server (GW),
generation of a random number by the gateway server (GW) in response to the short message inquiry,
sending the random number thus generated in a response to the short message inquiry from the gateway server (GW) to both terminals (A, B), and
encrypting the short-distance wireless connection thus set up between the terminals (A, B), using the aforesaid random number and encryption keys stored on the user identity modules of the terminals (A, B) .

2. Method according to claim 1, **characterized in that** the random number is produced by generating it using the gateway server (GW).

3. Method according to claim 1, **characterized in that** the random number is produced by sending a random number request from the gateway server (GW) to a home location register (HLR) provided in connection with the mobile communication network and sending the random number in question from the home location register (HLR) to the gateway server (GW) in response to the request.

4. Method according to claim 1, 2 or 3, **characterized in that** the target address of the short message inquiry comprises the target number of the gateway server (GW).

5. Method according to claim 1, 2, 3 or 4, **characterized in that** the information contained in the short message inquiry comprises the MSISDN subscriber number of the terminal selected as slave.

6. Method according to claim 1, 2, 3, 4 or 5, **characterized in that** the MSISDN subscriber numbers of the terminals (A, B) are used as a selection parameter.

7. Method according to claim 1, 2, 3, 4 5 or 6, **characterized in that**, for identification of the first terminal (A) by the second terminal (B), the MSISDN subscriber number of the first terminal (A) is presented on the display of the second terminal (B) .

8. Method according to claim 1, 2, 3, 4, 5, 6 or 7, **characterized in that** the short-distance wireless connection set up between the terminals (A, B) is encrypted by using a predetermined symmetrical-key encryption technique.

9. Method according to claim 1, 2, 3, 4, 5, 6 or 7, the short-distance wireless connection is a Bluetooth connection.

10. Method according to claim 1, 2, 3, 4, 5, 6, 7 or 8, **characterized in that** the short-distance wireless connection is an IrDA connection.

11. Method according to claim 1, 2, 3, 4, 5, 6, 7, 8, 9 or 10, **characterized in that** the subscriber identity module is a USIM module.

12. Method according to claim 11, **characterized in that** the USIM module comprises a dedicated storage location, which comprises predetermined connection parameters associated with short-distance wireless connection setup.

13. Method according to claim 12, **characterized in that** the connection parameters comprise the MSISDN subscriber numbers of those terminals with which short-distance wireless connection setup is allowed.

14. Method according to claim 12 or 13, **characterized in that** the connection parameters comprise the MSISDN subscriber numbers of those terminals with which short-distance wireless connection setup is not allowed.

15. Method according to claim 12, 13 or 14, **characterized in that** the connection parameters comprise the MSISDN subscriber numbers of those terminals with which short-distance wireless connection setup is only allowed after a separate interactive verification inquiry.

## Patentansprüche

1. Verfahren zum Authentifizieren eines drahtlosen Kurzstrecken-Verbindungsaufbaus und zum Verschlüsseln einer zwischen zwei oder mehr Mobilkommunikationsendgeräten in einem eine Anzahl von mobilen Endgeräten (A, B) und einen Gateway-Server (GW) aufweisenden digitalen mobilen Kommunikationsnetzwerk aufgebauten Verbindung, wobei jedes der mobilen Endgeräte ein Teitnehmerkennungsmodul und ein drahtloses Kurzstrecken-Verbindungsmodul aufweist, umfassend folgende Schritte:
Senden einer Anforderung für einen drahtlosen Kurzstrecken-Verbindungsaufbau von einem ersten Endgerät (A) zu einem zweiten Endgerät (B),
Identifizieren des ersten Endgeräts (A) durch das zweite Endgerät (B), und
Auswählen eines der Endgeräte als Master und des anderen Endgeräts als Slave auf der Grundlage eines vorbestimmten Auswahlparameters,
**dadurch gekennzeichnet, dass** das Verfahren folgende Schritte aufweist:
Senden einer MSISDN-Teilnehmernummer (Mobilteilnehmer-ISDN) des ersten Endgeräts (A) zusammen mit der Anfrage für einen drahtlosen Kurzstrecken-Verbindungsaufbau an das zweite Endgerät (B),
Verwenden der MSISDN-Teitnehmernummer des ersten Endgeräts (A) zum Identifizieren des ersten Endgeräts (A) durch das zweite Endgerät (B),
Senden einer Kurznachricht-Anfrage von dem als Master ausgewählten Endgerät zu dem Gateway-Server (GW),
Erzeugen einer Zufallszahl durch den Gateway-Server (GW) ansprechend auf die Kurznachrichten-Anfrage,
Senden der so erzeugten Zufallszahl ansprechend auf die Kurznachrichten-Anfrage von dem Gateway-Server (GW) an beide Endgeräte (A, B) und
Verschlüsseln der so zwischen den Endgeräten (A, B) aufgebauten drahtlosen Kurzstrecken-Verbindung unter Verwendung der genannten Zufallszahl und von in den Benutzerkennungsmodulen der Endgeräte (A, B) gespeicherten Verschlüsselungs-Schlüsseln.

2. Verfahren nach Anspruch 1, **dadurch gekennzeichnet, dass** die Zufallszahl erzeugt wird durch Generieren unter Verwendung des Gateway-Servers (GW).

3. Verfahren nach Anspruch 1, **dadurch gekennzeichnet, dass** die Zufallszahl erzeugt wird durch Senden einer Zufallszahlanforderung von dem Gateway-Server (GW) an eine Heimatdatei (HLR) in Verbindung mit dem mobilen Kommunikationsnetzwerk, und Senden der fraglichen Zufallszahl von der Heimatdatei (HLR) zu dem Gateway-Server (GW) ansprechend auf die Anforderung.

4. Verfahren nach Anspruch 1, 2 oder 3, **dadurch gekennzeichnet, dass** die Zieladresse der Kurznachrichtenanfrage die Zielnummer des Gateway-Servers (GW) aufweist.

5. Verfahren nach Anspruch 1, 2, 3 oder 4, **dadurch gekennzeichnet, dass** die in der Kurznachrichtenanfrage enthaltene Information die MSISDN-Teilnehmernummer des als Slave ausgewählten Endgeräts aufweist.

6. Verfahren nach Anspruch 1, 2, 3, 4 oder 5, **dadurch gekennzeichnet, dass** die MSISDN-Teilnehmernummern der Endgeräte (A, B) als Auswahlparameter verwendet werden.

7. Verfahren nach Anspruch 1, 2, 3, 4, 5 oder 6, **dadurch gekennzeichnet, dass** zum Identifizieren des ersten Endgerätes (A) durch das zweite Endgerät (B) die MSISND-Teilnehmernummer des ersten Endgeräts (A) auf dem Display des zweiten Endgeräts (B) dargestellt wird.

8. Verfahren nach Anspruch 1, 2, 3, 4, 5, 6 oder 7, **dadurch gekennzeichnet, dass** der drahtlose Kurzstrecken-Verbindungsaufbau zwischen den Endgeräten (A, B) mit Hilfe einer vorbestimmten Verschlüsselungstechnik mit symmetrischem Schlüssel verschlüsselt wird.

9. Verfahren nach Anspruch 1, 2, 3, 4, 5, 6 oder 7, bei dem die drahtlose Kurzstreckenverbindung eine Bluetooth-Verbindung ist.

10. Verfahren nach Anspruch 1, 2, 3, 4, 5, 6, 7 oder 8, **dadurch gekennzeichnet, dass** die drahtlose Kurzstreckenverbindung eine IrDA-Verbindung ist.

11. Verfahren nach Anspruch 1, 2, 3, 4, 5, 6, 8, 9 oder 10, **dadurch gekennzeichnet, dass** das Teilnehmerkennungsmodul ein USIM-Modul ist.

12. Verfahren nach Anspruch 11, **dadurch gekennzeichnet, dass** das USIM-Modul eine reservierte Speicherstelle aufweist, welche vorbestimmte Verbindungsparameter im Zusammenhang mit dem Aufbau der drahtlosen Kurzstreckenverbindung aufweist.

13. Verfahren nach Anspruch 12, **dadurch gekennzeichnet, dass** die Verbindungsparameter die MSISDN-Teitnehmernummern solcher Endgeräte umfassen, mit denen ein drahtloser Kurzstrecken-Verbindungsaufbau erlaubt ist.

14. Verfahren nach Anspruch 12 oder 13, **dadurch gekennzeichnet, dass** die Verbindungsparameter die MSISDN-Teilnehmernummern solcher Endgeräte aufweisen, mit denen ein drahtloser Kurzstrecken-Verbindungsaufbau nicht erlaubt ist.

15. Verfahren nach Anspruch 12, 13 oder 14, **dadurch gekennzeichnet, dass** die Verbindungsparameter die MSISDN-Teilnehmernummern solcher Endgeräte aufweisen, mit denen ein drahtloser Kurzstrecken-Verbindungsaufbau nur nach einer gesonderten interaktiven Verifizierungsanfrage erlaubt ist.

## Revendications

1. Procédé d'authentification d'établissement de connexion sans fil à courte distance et de chiffrement d'un établissement de connexion entre deux terminaux de communication mobile ou plus dans un réseau de communication mobile numérique comprenant un certain nombre de terminaux mobiles (A, B) et un serveur passerelle (GW), chacun desdits terminaux mobiles comprenant un module d'identité d'abonné et un module de connexion sans fil à courte distance, ledit procédé comprenant les étapes consistant à :
envoyer une interrogation d'établissement de connexion sans fil à courte distance d'un premier terminal (A) à un deuxième terminal (B),
identifier le premier terminal (A) par le deuxième terminal (B), et
sélectionner un des terminaux en tant que maître et l'autre en tant qu'esclave sur la base d'un paramètre de sélection prédéterminé,
**caractérisé en ce que** le procédé comprend en outre les étapes consistant à :
envoyer le numéro d'abonné MSISDN (RNIS d'abonné mobile) du premier terminal (A) en même temps que l'interrogation d'établissement de connexion sans fil à courte distance au deuxième terminal (B),
utiliser ledit numéro d'abonné MSISDN du premier terminal (A) pour l'identification du premier terminal (A) par le deuxième terminal (B),
envoyer une interrogation de message court du terminal sélectionné en tant que maître au serveur passerelle (GW),
générer un nombre aléatoire par le serveur passerelle (GW) en réponse à l'interrogation de message court,
envoyer le nombre aléatoire ainsi généré dans une réponse à l'interrogation de message court, du serveur passerelle (GW) aux deux terminaux (A, B), et
chiffrer la connexion sans fil à courte distance ainsi établie entre les terminaux (A, B), en utilisant le nombre aléatoire susmentionné et des clés de chiffrement mémorisées sur les modules d'identité d'abonné des terminaux (A, B) .

2. Procédé selon la revendication 1, **caractérisé en ce que** le nombre aléatoire est produit en le générant en utilisant le serveur passerelle (GW).

3. Procédé selon la revendication 1, **caractérisé en ce que** le nombre aléatoire est produit en envoyant une demande de nombre aléatoire du serveur passerelle (GW) à un registre des abonnés nominaux (HLR) prévu en relation avec le réseau de communication mobile et en envoyant le nombre aléatoire en question du registre des abonnés nominaux (HLR) au serveur passerelle (GW) en réponse à la demande.

4. Procédé selon la revendication 1, 2 ou 3, **caractérisé en ce que** l'adresse cible de l'interrogation de message court comprend le nombre cible du serveur passerelle (GW).

5. Procédé selon la revendication 1, 2, 3 ou 4, **caractérisé en ce que** les informations contenues dans l'interrogation de message court comprennent le numéro d'abonné MSISDN du terminal sélectionné en tant qu'esclave.

6. Procédé selon la revendication 1, 2, 3, 4 ou 5, **caractérisé en ce que** les numéros d'abonné MSISDN des terminaux (A, B) sont utilisés en tant que paramètre de sélection.

7. Procédé selon la revendication 1, 2, 3, 4, 5 ou 6, **caractérisé en ce que**, pour l'identification du premier terminal (A) par le deuxième terminal (B), le numéro d'abonné MSISDN du premier terminal (A) est présenté sur l'écran du deuxième terminal (B).

8. Procédé selon la revendication 1, 2, 3, 4, 5, 6 ou 7, **caractérisé en ce que** l'établissement de connexion sans fil à courte distance entre les terminaux (A, B) est chiffré en utilisant une technique de chiffrement à clef symétrique prédéterminée.

9. Procédé selon la revendication 1, 2, 3, 4, 5, 6 ou 7, **caractérisé en ce que** la connexion sans fil à courte distance est une connexion Bluetooth.

10. Procédé selon la revendication 1, 2, 3, 4, 5, 6, 7 ou 8, **caractérisé en ce que** la connexion sans fil à courte distance est une connexion IrDA.

11. Procédé selon la revendication 1, 2, 3, 4, 5, 6, 7, 8, 9 ou 10, **caractérisé en ce que** le module d'identité d'abonné est un module USIM.

12. Procédé selon la revendication 11, **caractérisé en ce que** le module USIM comprend un emplacement de mémorisation dédié qui comprend des paramètres de connexion prédéterminés associés à l'établissement de connexion sans fil à courte distance.

13. Procédé selon la revendication 12, **caractérisé en ce que** les paramètres de connexion comprennent les numéros d'abonné MSISDN des terminaux avec lesquels un établissement de connexion sans fil à courte distance est autorisé.

14. Procédé selon la revendication 12 ou 13, **caractérisé en ce que** les paramètres de connexion comprennent les numéros d'abonné MSISDN des terminaux avec lesquels un établissement de connexion sans fil à courte distance n'est pas autorisé.

15. Procédé selon la revendication 12, 13 ou 14, **caractérisé en ce que** les paramètres de connexion comprennent les numéros d'abonné MSISDN des terminaux avec lesquels un établissement de connexion sans fil à courte distance n'est autorisé qu'après une interrogation de vérification interactive séparée.
